(19) Europäisches Patentamt / European Patent Office / Office européen des brevets

(11) **EP 1 883 525 B2**

(12) **NEUE EUROPÄISCHE PATENTSCHRIFT**

Nach dem Einspruchsverfahren

(45) Veröffentlichungstag und Bekanntmachung des Hinweises auf die Entscheidung über den Einspruch:
**14.03.2012   Patentblatt 2012/11**

(45) Hinweis auf die Patenterteilung:
**05.11.2008   Patentblatt 2008/45**

(21) Anmeldenummer: **06724761.9**

(22) Anmeldetag: **09.05.2006**

(51) Int Cl.:
**B29C 55/08** (2006.01)    **B29C 35/02** (2006.01)

(86) Internationale Anmeldenummer:
**PCT/EP2006/004313**

(87) Internationale Veröffentlichungsnummer:
**WO 2006/119959 (16.11.2006 Gazette 2006/46)**

(54) **VERFAHREN ZUM QUERVERSTRECKEN EINER MATERIALBAHN**

METHOD FOR THE TRANSVERSE DRAWING OF A MATERIAL WEB

PROCEDE  D'ETIRAGE TRANSVERSAL D'UNE BANDE DE MATIERE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.05.2005   DE 102005021471**

(43) Veröffentlichungstag der Anmeldung:
**06.02.2008   Patentblatt 2008/06**

(73) Patentinhaber: **Treofan Germany GmbH & Co.KG 66539 Neunkirchen (DE)**

(72) Erfinder:
• **WINTRICH, Leo 66459 Kirkel (DE)**
• **HANSOHN, Robert 66459 Krikel (DE)**

(74) Vertreter: **Mai, Dörr, Besier Patentanwälte Steuerberater/Wirtschaftsprüfer John-F.-Kennedy-Straße 4 65189 Wiesbaden (DE)**

(56) Entgegenhaltungen:
**WO-A-98/25754    WO-A2-98/25753 DE-A1- 2 356 743**

• **DATABASE WPI Section Ch, Week 200352 Derwent Publications Ltd., London, GB; Class A23, AN 2003-545431 XP002388880 & JP 2002 361733 A (TOYOBO KK) 18. Dezember 2002 (2002-12-18)**
• **DATABASE WPI Section Ch, Week 198017 Derwent Publications Ltd., London, GB; Class A17, AN 1980-30006C XP002388881 & JP 55 034937 A (UNITIKA LTD) 11. März 1980 (1980-03-11)**

EP 1 883 525 B2

**Beschreibung**

Die vorliegende Erfindung betrifft ein Verfahren zum Verstrecken einer Materialbahn in Querrichtung.

Biaxial orientierte Folien sind im Stand der Technik bekannt und werden in vielen verschiedenen Anwendungsbereichen eingesetzt. Insbesondere wurden in den vergangenen Jahren auch biaxial orientierte Polypropylenfolien entwickelt, welche bei erhöhten Temperaturen in die eine oder andere Richtung mehr oder weniger stark schrumpfen. Die Schrumpfeigenschaften hängen von der Zusammensetzung der einzelnen Schichten sowie von den Bedingungen während der Herstellung der Folie ab. Insbesondere sind die Temperaturen bei der Verstreckung, die Streckfaktoren und die anschließende Fixierung ausschlaggebend. Über die Variation dieser Bedingungen lassen sich die Schrumpfeigenschaften einer biaxial orientierten Folie innerhalb eines breiten Bereiches variieren.

Für einige Anwendungen ist es besonders wünschenswert, dass die Folien einen hohen Schrumpf in nur eine Richtung aufweisen, wobei der Schrumpf in die andere Richtungen gleichzeitig möglichst gering sein sollte. Für andere Anwendungen sind Folien bevorzugt, welche in beide Richtungen einen Schrumpf aufweisen. Derartige Schrumpffolien können aus verschiedensten thermoplastischen Polymeren hergestellt werden, beispielsweise Polyolefin, wie Polypropylen oder Polyethylen oder aus aromatischen oder aliphatischen Polyestern, etc.

Die Herstellung solcher Schrumpffolien aus Polypropylen ist in der Praxis grundsätzlich ohne größere Schwierigkeiten umgesetzt. Nach dem üblichen Herstellverfahren (Flachfolienverfahren) werden die Polymeren der einzelnen Schichten zunächst in einem Extruder aufgeschmolzen und die Schmelzen durch eine Flachdüse extrudiert. Der geformte Schmelzefilm wird auf einer Abzugswalze abgekühlt, verfestigt und anschließend biaxial verstreckt. Die Verstreckung in Längsrichtung durch verschieden schnell laufende Walzen wird im allgemeinen zuerst durchgeführt. Anschließend erfolgt in einem sogenannten Querstreckrahmen (Stenterrahmen) die Orientierung in Querrichtung und abschließend die Fixierung. Diese biaxiale Verstreckung stellt wichtige Gebrauchseigenschaften wie mechanische Festigkeit, Steifigkeit, Transparenz, ein gleichmäßiges Dickenprofil etc. sicher.

In diesen Herstellverfahren ist es essentiell, dass bestimmte Temperaturen beim Abkühlen der Vorfolie, bei der Längsverstreckung, sowie beim Querstrekken und der Fixierung eingehalten werden. Aus diesem Grund sind an jeder Anlage Vorrichtungen zum Erwärmen, bzw. zum Abkühlen vorgesehen, durch welche die Folie möglichst gleichmäßig auf die jeweilige Temperatur erwärmt, bzw. abgekühlt werden kann. Vor der Längsverstreckung erfolgt eine Erwärmung beispielsweise über beheizte Walzen, auch ein die Folie umschließender Luftheizkasten ist möglich. Nach der Längsstreckung wird die Folie wieder abgekühlt. Dann erfolgt eine erneute Erwärmung auf die gewünschte Querstrecktemperatur. Die so erwärmte Folie wird dann in die sogenannten Streckfelder geführt und durch divergente Führung der Kluppenkette in Laufrichtung der Folie kontinuierlich verbreitert. Um eine möglichst gleichmäßige Verstrekkung der Folie zu erzielen, wird eine gleichmäßige Temperatur über die Breite der Folienbahn aufrechterhalten. Beim Durchlaufen der Streckfelder kann die Temperatur in Laufrichtung der Folie variieren, im allgemeinen sind die hinteren Streckfelder etwas kühler als der Eingangsbereich (negativer Temperaturgradient). Diese Temperaturführung ist günstig für das Dickenprofil der Folie. Zur Aufrechterhaltung dieser Temperaturen beim Querstrecken ist dieser Bereich der Folienherstellanlagen isolierend umbaut.

Aus den Druckschriften DE-A-2356743 und JP-A-2002361733 ist bekannt, die Randzonen einer Folie vor dem Querstrecken bzw. während des Querstreckens auf eine höhere Temperatur als die Mitte zu heizen.

Die Druckschrift WO-A-9825754 offenbart in einer Ausführungsform die Verwendung von Heißluftdüsen zum Heizen der Randzonen einer simultan biaxial gestreckten Folie während der Fixierung.

WO 98/25753 beschreibt ein Verfahren und Vorrichtung zur Folienaufheizung sowie eine Meßeinrichtung zur Messung der Folientemperatur.

Es hat sich gezeigt, dass es grundsätzlich möglich ist nach diesem Verfahren eine Folie mit den gewünschten Schrumpfeigenschaften, auch aus Polypropylen, herzustellen. Im Rahmen der Untersuchungen zur vorliegenden Anmeldung stellte sich heraus, dass die Querschrumpfwerte über die Breite der Folie nicht konstant sind und diese Abweichungen in bestimmten Anwendungen zu Störungen führen. Häufig sind die Querschrumpfwerte zu den Rändern hin höher als in der Folienmitte. Diese ungleichmäßige Verteilung des Schrumpfes über die Breite der Folie (Querschrumpfprofil oder Badewannenprofil) ist daher verbesserungsbedürftig.

Es war somit Aufgabe der vorliegenden Erfindung ein Verfahren zur Verfügung zu stellen, nach dem eine biaxial orientierte Folie hergestellt werden kann, welche einen möglichst gleichmäßigen Querschrumpf bei erhöhter Temperatur über die Breite der Folienbahn aufweist. Das Verfahren soll einfach, wirtschaftlich effizient und für verschiedene Folienmaterialien, insbesondere für biaxial verstreckte Polypropylenfolien, einsetzbar sein. Das Verfahren soll sehr flexibel auch für andere Ausgangsmaterialien und unterschiedlichen Laufgeschwindigkeiten geeignet sein. Gegebenfalls notwendige Vorrichtungen sollen wartungsarm und wenig reparaturanfällig sein.

Überraschenderweise wird diese Aufgabe gelöst, durch ein Verfahren zum Querstrecken einer unorientierten oder einer in Längsrichtung orientierten Folienbahn (8) aus thermoplastischem Kunststoff, bei welchem eine unverstreckte oder eine längsgestreckte Folie (8) einem Querstreckrahmen zugeführt wird, wobei der Querstreckrahmen Aufheizfelder (1), Streckfelder (2) und Fixierfelder (3) umfasst, und die Folie (8) am Beginn des ersten Aufheizfeldes an beiden Rändern (4) von den Kluppen (7) einer Kluppenkette erfasst wird und in den Aufheizfeldern (1) (1) auf eine Querstrecktemperatur $T_Q$ aufgeheizt wird und die Folie (8) in den anschließenden Streckfeldern (2) durch divergierende (V-förmige) Führung der Kluppenkette in Querrichtung verstreckt wird und in den Fixierfeldern (3) einer Temperatur $T_F$ ausgesetzt wird, wobei $T_Q > T_F$ ist, und wobei die Randzonen (5) der Folie in den Streckfeldern (2) und/oder in den Fixierfeldern (3) derart aufgeheizt oder thermisch isoliert werden, dass die Randzonen (5) der Folie beim Querstrecken und/oder beim Fixieren eine höhere Temperatur als die Mitte der Folienbahn (6) aufweisen und wobei die Randzonen (5) unmittelbar an die Ränder (4), die von den Kluppen (7) erfaßt werden, angrenzen.

Die Längsrichtung ist im Sinne der vorliegenden Erfindung die Richtung, in die die Materialbahn während der Herstellung läuft; diese Richtung wird auch als Maschinenlaufrichtung bezeichnet. Die Querrichtung ist im Sinne der vorliegenden Erfindung diejenige Richtung, die in einem Winkel von 90°, d.h. quer, zur Maschinenlaufrichtung verläuft.

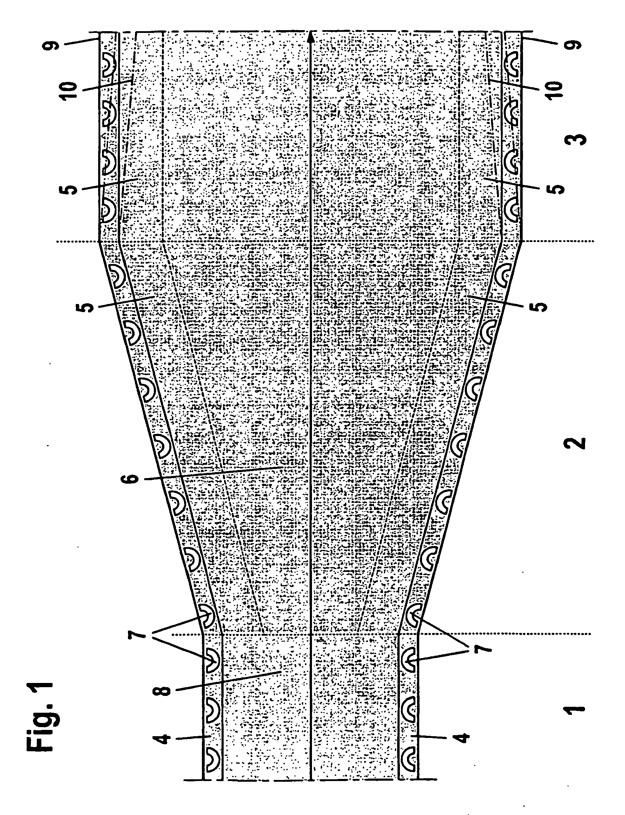

Figur 1 stellt die Verstreckung einer Folie in einem Querstreckrahmen in einer schematischen Aufsicht dar. Der Querstreckrahmen umfasst drei Bereiche, das Aufheizfeld 1, das Streckfeld 2 und das Fixierfeld 3. In der Fachwelt spricht man auch von Aufheizfeldern, Streckfeldern und Fixierfeldern, um anzudeuten, dass das jeweilige Aufheiz-, Streck- und Fixierfeld mehrere Bereiche oder Zonen umfasst. Beim Eintritt in das Aufheizfeld 1 werden die Folienränder 4 von den Kluppen 7 erfasst und geführt. An die Folienränder 4 grenzen unmittelbar die Randzonen 5 der Folie an. Die Mitte der Folie ist der Bereich 6. Beim Durchlaufen der Aufheizfelder 1 wird die Folie 8 auf eine Temperatur $T_Q$ erwärmt. Im anschließenden Streckfeld 2 wird die Folie 8 durch divergierende Führung der Kluppenkette in Querrichtung verstreckt. Nach der Querstreckung verlässt die Folie 8 das Streckfeld 2 und tritt in die Fixierzone 3 ein, in welcher die Folie 8 bei gleicher Breite gemäß Ziffer 9 gehalten oder leicht konvergieren, d.h. mit abnehmender Breite, gemäß Ziffer 10 gefahren wird.

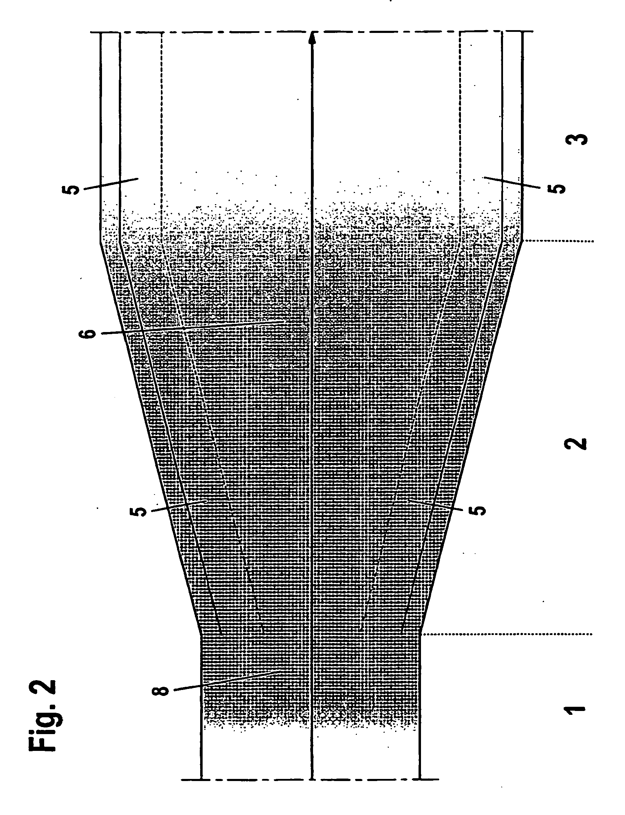

Figur 2 stellt ein bevorzugtes Temperaturprofil bei einer Querstreckung nach dem Stand der Technik dar (negativer Temperaturgradient). Je dunkler der Bereich desto höher ist die dort herrschende Temperatur, bzw. die Temperatur der Folie 8. In den Aufheizfeldern 1 wird die Folie 8 auf eine Temperatur $T_Q$ aufgeheizt, mit der sie in das Streckfeld 2 eintritt. Beim Durchlaufen der Streckfelder 2 temperiert man derart, dass die Folientemperatur kontinuierlich niedriger wird. Die Folie 8 weist jedoch an jeder Position im Streckfeld 2 über die Breite der Folienbahn die gleiche Temperatur auf. Beim Durchlaufen der Fixierfelder 3 wird die Folie gekühlt, wodurch auch in diesem Bereich 3 die Temperatur in Laufrichtung weiter abnimmt.

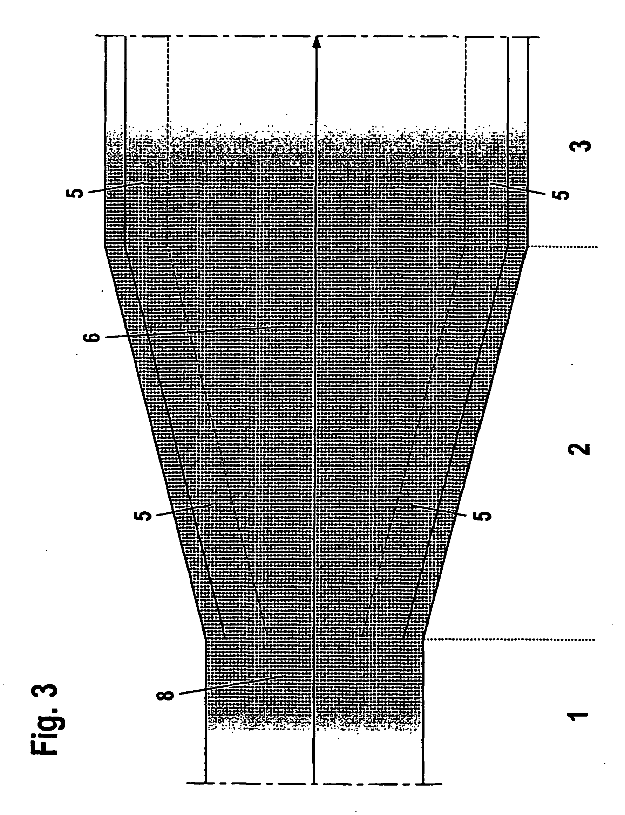

Figur 3 stellt eine alternative Temperaturführung in den Streckfeldern 2 dar (Isotherme Temperaturführung). Hier wird die Folie 8 beim Durchlaufen der Streckfelder 2 so temperiert, dass die Folie 8 in allen Streckfeldern in etwa die gleiche Temperatur hat. Im Fixierbereich 3 wird dann wie üblich abgekühlt.

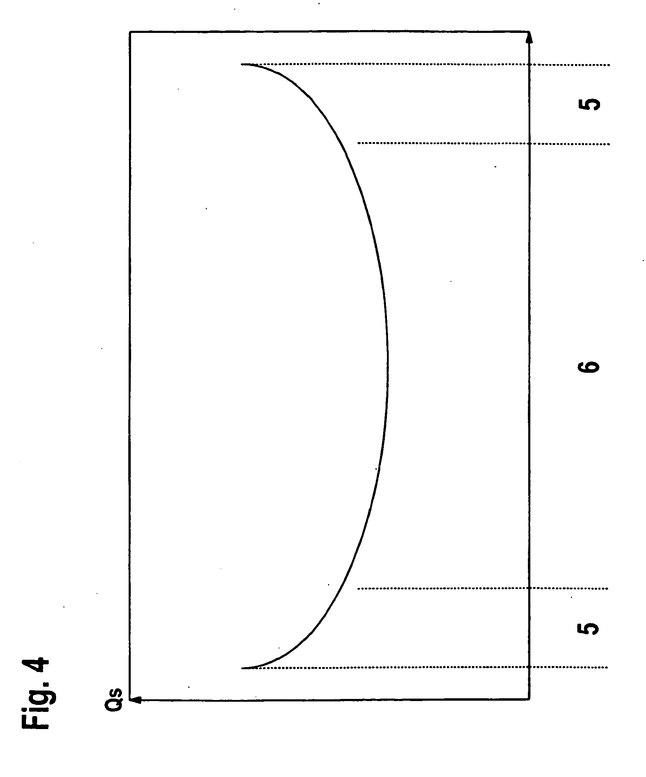

Figur 4 stellt schematisch den Querschrumpf Qs über die Breite der Folie dar, welcher bei einer Herstellung der Folie nach dem Stand der Technik resultiert (Badewannenprofil). Im Bereich der Folienmitte 6 ist der Querschrumpf am niedrigsten und steigt zu den Randzonen 5 hin an. Die unverstreckten Ränder 4 sind in dieser Darstellung bereits gesäumt.

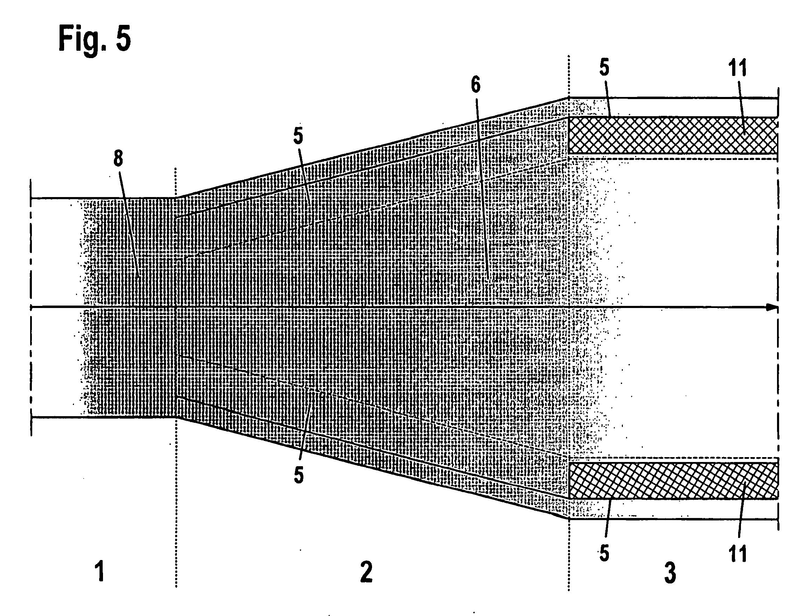

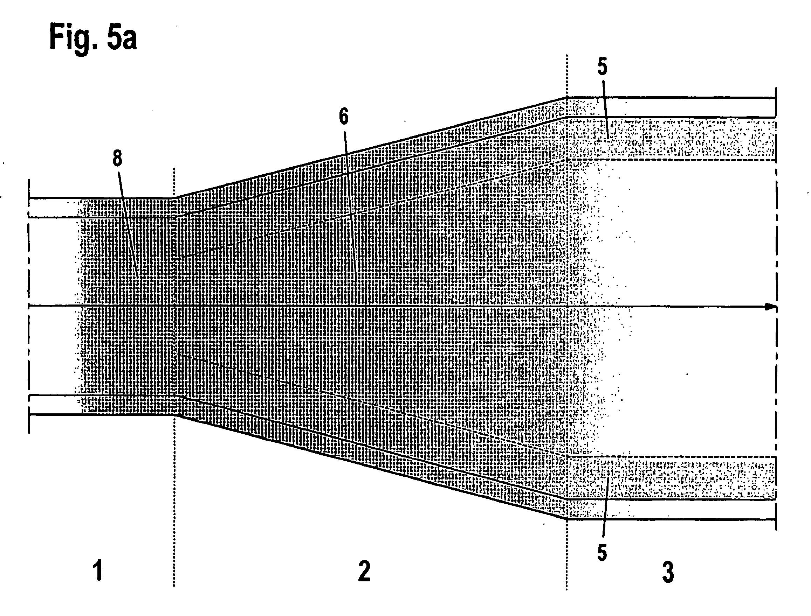

Figuren 5 und 5a stellen eine Variante einer Querstreckung nach der vorliegenden Erfindung dar. Die Randzonen 5 innerhalb des Fixierfeldes 3 sind durch geeignete Maßnahmen oder Vorrichtungen wie z.B. Abdeckbleche 11 geschützt, wodurch die Abkühlung der Randzonen 5 im Bereich der Fixierung 3 verhindert wird. Im Ergebnis behalten die Randzonen 5 während der Fixierung eine höhere Temperatur, obwohl die Folie 8 beim Durchlaufen der Fixierfelder 3 abgekühlt wird (Fig 5a).

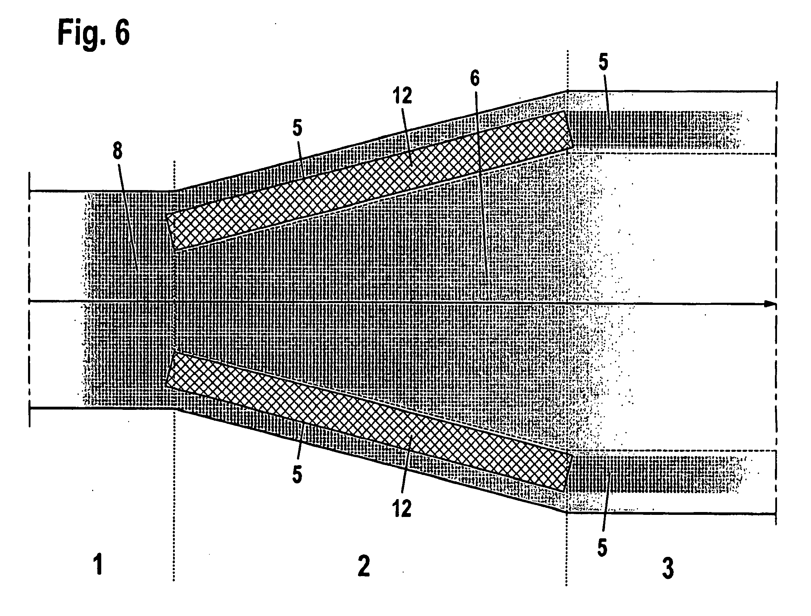

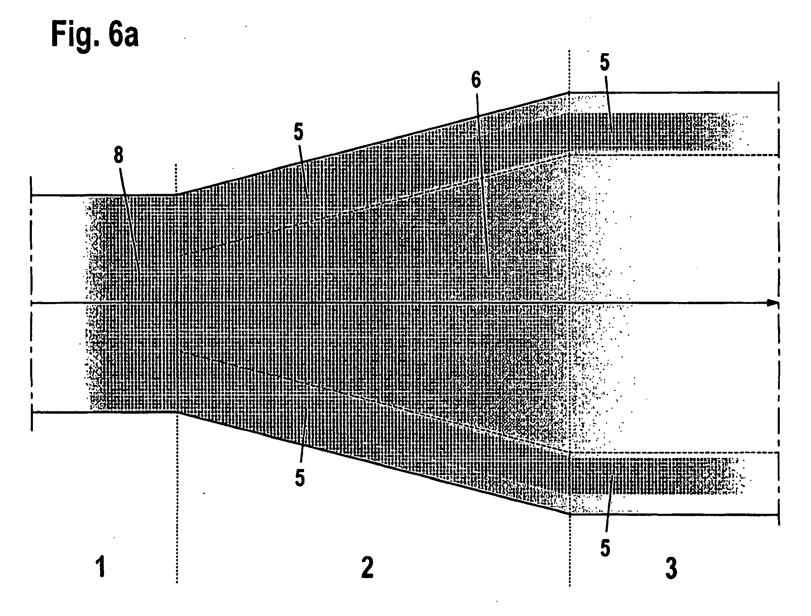

Figuren 6 und 6a stellen eine alternative Verfahrensvariante dar, bei der ein Temperaturprofil über die Folienbreite im Bereich der Streckfelder 2 eingestellt wird. Die Randzonen 5 innerhalb des Streckfeldes 2 sind durch Abdeckbleche 12 geschützt, wodurch die Abkühlung der Randzonen 5 im Bereich des Streckfeldes 2 verhindert wird. Im Ergebnis behalten die Randzonen 5 während der Querstreckung eine höhere Temperatur als die Folienmitte 6, obwohl das Streckfeld 2 durch Kühlung ein in Längsrichtung abfallendes Temperaturprofil aufweist. Dieses Temperaturprofil ist idealisiert in Fig. 6a dargestellt.

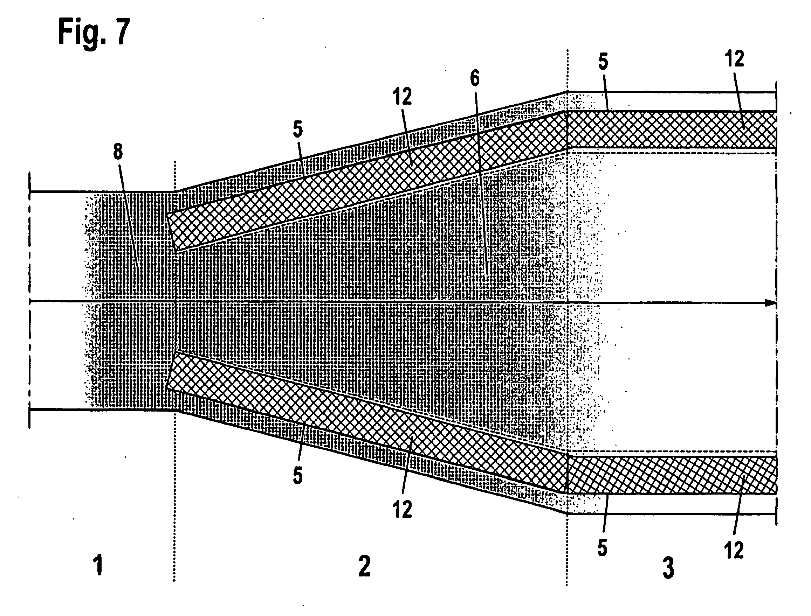

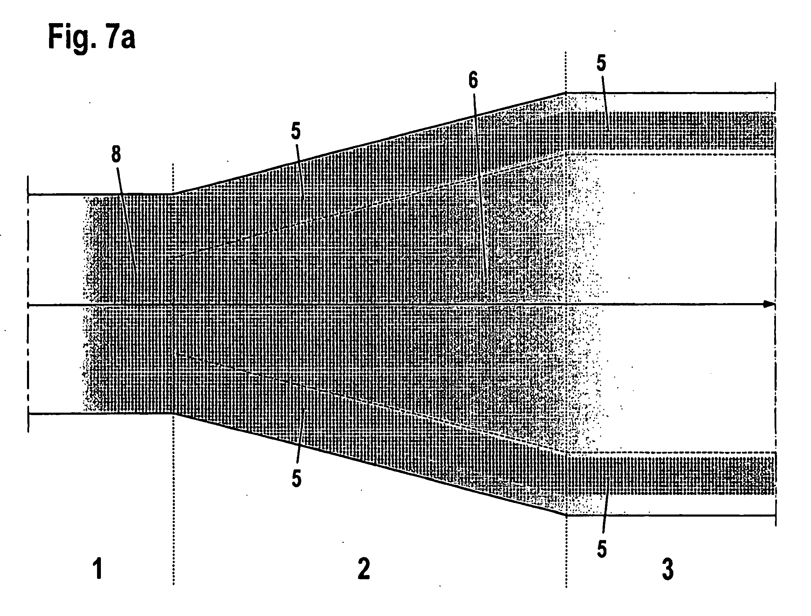

Figuren 7 und 7a stellen eine weitere Variante des erfindungsgemäßen Verfahrens dar. Hier wird im Streckfeld 2 und im Fixierfeld 3 durch Abdeckbleche 12 so temperiert, dass die Randzonen 5 sowohl während der Querstreckung als im Bereich der Fixierung wärmer sind als der Mittenbereich der Folie 6.

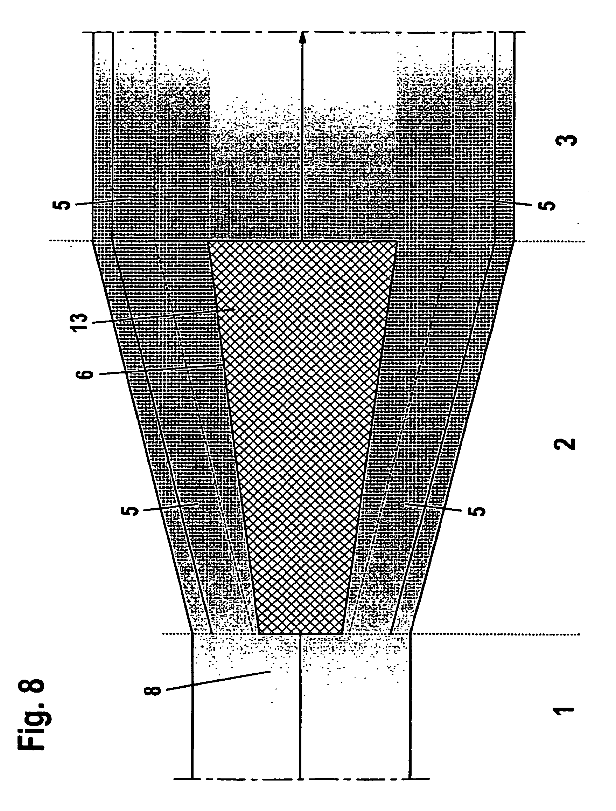

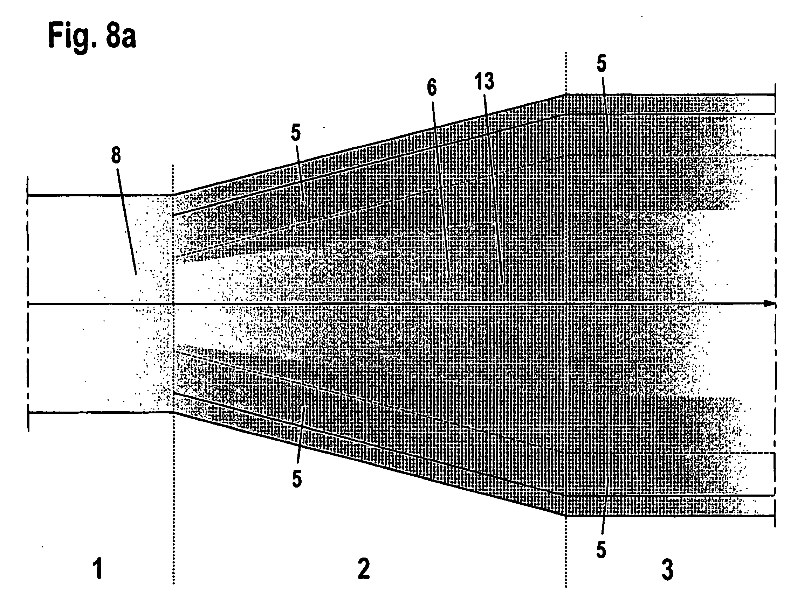

Figuren 8 und 8a stellen eine Variante des erfindungsgemäßen Verfahrens dar, bei dem im Streckfeld 2 ein positiver Temperaturgradient eingestellt wird. Hier wird im Streckfeld 2 der Mittenbereich 6 der Folie durch ein Abdeckblech 13 so isoliert, so dass die Randzonen 5 während der Querstreckung wärmer sind als der Mittenbereich der Folie 6.

Das erfindungsgemäße Verfahren ist für verschiedene flächenförmige Materialbahnen geeignet und kann überall vorteilhaft eingesetzt werden, wo es zu einem ungleichmäßigen Eigenschaftsprofil, wie beispielsweise einem Querschrumpfprofil, über die Breite der Materialbahn kommt. Das Verfahren hat sich insbesondere für Folien bewährt, deren Schicht oder Schichten aus thermoplastischen Kunststoffen aufgebaut sind, beispielsweise aus aliphatischen oder aromatischen Polyestern, Polyolefinen, wie Polyethylenen oder Polypropylenen, Cycloolefinen, Polycarbonat, Polyamide etc,. Derartige Folien können einschichtig oder mehrschichtig sein und gleiche oder verschiedene Polymere in den Schichten enthalten. Das Verfahren ist insbesondere für Materialbahnen geeignet, die nach der Längsverstreckung eine Dicke von 2 bis 2000 $\mu$m, vorzugsweise 10 bis 1000 $\mu$m, aufweisen.

Im allgemeinen wird die erfindungsgemäße Querstreckung im Anschluss an eine Längsstreckung ausgeführt. Gegebenenfalls kann man sich die Vorteile der Erfindung auch zu nutze machen, wenn eine unverstreckte Folie nur erfindungsgemäß querverstreckt wird. Hierbei hat die unverstreckte Materialbahn vor der erfindungsgemäßen Querstreckung gleichfalls eine Dicke von 2 - 2000 $\mu$m, vorzugsweise 10 bis 1000 $\mu$m.

Bei dem erfindungsgemäßen Verfahren wird die längsgestreckte oder unverstreckte Folienbahn mittels geeigneter Maßnahmen auf die erforderliche Querstrecktemperatur $T_Q$ aufgeheizt. Diesen Bereich bezeichnet man auch als Aufheizfeld oder Aufheizfelder (1). Die Erwärmung erfolgt beispielsweise über Heißluft, die aus sogenannten Düsenkästen austritt, die unter- und oberhalb der Folienbahn angebracht sind. Im allgemeinen erfolgt die Erwärmung der Folienbahn (8) in den Aufheizfeldern (1) derart, dass die Folie über die Breite eine gleichmäßige Temperatur annimmt bzw. aufweist. Beim Einlaufen in die Aufheizfelder (1) wird die Folie (8) an beiden Rändern (4) von den Kluppen (7) einer umlaufenden Kluppenkette erfasst. Dieser Rand (4) ist in der Regel schmal im Verhältnis zur Gesamtbreite der Bahn. Es versteht sich von selbst, dass jede endlose Materialbahn zwei Ränder (4) hat, die Folie somit auf beiden Seite von den Kluppen (7) ergriffen wird. Die Kluppen (7) führen die Folie (8) durch den gesamten Querstreckrahmen (1 + 2 + 3). Polypropylenfolien werden in den Aufheizfeldern im allgemeinen auf eine Temperatur von bis zu 180° aufgeheizt, vorzugsweise auf eine Temperatur von 140 bis 170°C.

Nach Durchlaufen der Aufheizfelder (1) tritt die Folie (8) in das Streckfeld (2) ein. Durch die divergierende Führung der Kluppenkette wird die Folie (8) auf dem Weg durch das Streckfeld (2) kontinuierlich in die Breite gezogen, bis sie am Ende die vorgesehene Breite erreicht hat. Im Bereich des Streckfeldes (2) kann die Temperatur in Laufrichtung variieren, wobei eine abnehmende Temperatur (negativer Temperaturgradient) bevorzugt, aber auch eine ansteigende Temperatur (positiver Temperaturgradient) möglich ist. Alternativ kann die Temperatur im Streckfeld (2) auch möglichst konstant gehalten werden (isotherme Temperaturführung). Für Polypropylenfolien liegt die Temperatur in Streckfeldern in einem Bereich von 140 und 165°C.

Nach der Verstreckung im Streckfeld (2) durchläuft die Folie die Fixierung (3). In diesem Bereich hält man die Folie (8) mittels der Kluppen (7) bei einer gleichbleibenden Breite und bei einer in Laufrichtung konstanten oder abnehmenden Temperatur, um die durch Querstreckung erzielte Orientierung zu fixieren. Je nach den gewünschten Schrumpfeigenschaften kann in der Fixierung auch konvergierend gefahren werden, um die durch Orientierung eingebrachten Spannungen teilweise abzubauen. Beim Verlassen des Fixierfeldes (3) öffnen sich die Kluppen (7) und die Folie wird über rotierende Walzen weitergeführt, dabei auf Raumtemperatur abgekühlt und abschließend aufgewickelt.

Nach dem erfindungsgemäßen Verfahren zur Querstreckung wird zusätzlich zu der Steuerung der Temperatur in Laufrichtung der Folie ein Temperaturprofil über die Breite der Folie (8) derart eingestellt, daß beide Randzonen (5) der Folie (8) im Bereich des Streckfeldes (2) und/oder im Bereich des Fixierfeldes (3) eine höhere Temperatur aufweisen als die Bahnmitte der Folie (6). Überraschenderweise kann durch die Einstellung eines solchen Temperaturprofils über die Breite ein sehr gleichmäßiger, d.h. konstanter Querschrumpf über die Breite der Folie erzielt werden.

Im Sinne der vorliegenden Erfindung sind die "Ränder" (4), die die Kluppen (7) erfassen, zu unterscheiden von den Folienrändern (5) der gesäumten Folie (im Sinne der vorliegenden Erfindung als "Randzonen" (5) bezeichnet). Die Ränder (4), die die Kluppen (7) erfassen bleiben unverstreckt, werden nach der Herstellung gesäumt und als Regranulat wieder in den Folienherstellprozeß zurückgeführt. Die Breite dieser Ränder beträgt in Abhängigkeit von der Bauart der Kluppen (7) auf jeder Seite ca. 5 bis 15cm, vorzugsweise 7 bis 10cm, gemessen von der äußeren Kante.

Die Breite der Randzonen (5) der verstreckten Folie, welche nach dem Stand der Technik höhere Querschrumpfwerte aufweisen als der Mittenbereiche der Folie (6), betragen in Abhängigkeit von der Folienbreite auf jeder Seite ca. 5 bis 25%, vorzugsweise 8 bis 20% der Bahnbreite. Beispielsweise ist bei biaxial verstreckten Polypropylenfolien mit üblichen Bahnbreiten der gesäumten, biaxial verstreckten Endfolie von 5 bis 10m jede Randzone ca. 50 bis 200cm breit. Die zusätzliche erfindungsgemäße Erwärmung oder Isolierung erfolgt über die Breite dieser Randzonen (5).

Die vorstehend erwähnten Dimensionen der Ränder (4) und Randzonen (5) können je nach Folientyp oder Herstellanlage von diesen Werten auch mehr oder weniger stark abweichen. Im allgemeinen wird man die Erwärmung der Randzonen (5) in der Breite, soweit ausdehnen, dass Bereiche mit erhöhtem Querschrumpf weitgehend verschwinden, so dass die Folie über die gesamte Breite in etwa gleiche Querschrumpfwerte aufweist, d.h. Abweichungen vom Querschrumpf im Mittenbereich der Folie (6) sollen möglichst gering sein.

Die Ursachen für die erzielten Effekte sind wissenschaftlich nicht vollständig verstanden, wodurch aber die Anwendbarkeit der erfindungsgemäßen Lehre in keiner Weise eingeschränkt wird. Polymere sind langkettige Moleküle, die in der Schmelze und nach dem Abkühlen orientierungslos, ineinander verknäult vorliegen. Durch die Einwirkung von Streckkräften richten sich diese Molekülketten in Richtung der einwirkenden Kräfte aus, d.h. sie werden in eine bestimmte Richtung orientiert. Diese Ausrichtung setzt einerseits eine bestimmte Beweglichkeit der Molekülketten und angreifende Kräfte voraus, die auf die Polymerketten einwirken. Beim Querstrecken muß durch eine erhöhte Temperatur die Beweglichkeit der Polymerketten groß genug sein, um eine Re-Orientierung der bereits in Längsrichtung ausgerichteten Polymerketten in Querrichtung zu ermöglichen.

Die Auswirkungen der angreifenden Streckkräfte hängen sowohl von der Beweglichkeit der Molekülketten zu diesem Zeitpunkt ab, sowie von dem Temperaturerlebnis, welches die Polymerketten nach der Ausrichtung durch die Streckkräfte erfahren. Durch Absenken der Temperatur im Fixierfeld nach erfolgter Orientierung wird der orientierte Zustand gewissermaßen eingefroren, durch Beibehaltung einer erhöhten Temperatur beim Fixieren führt die Beweglichkeit der Polymerkette teilweise zu einer Relaxierung des geordneten, orientierten Zustandes. Die vorstehenden Erläuterungen machen verständlich, daß grundsätzlich das Ergebnis einer biaxialen Verstreckung wesentlich von den Temperaturen abhängt, die die Folie vor, während und nach der Verstrekkung erfährt.

Bei der Quer-Verstreckung beginnt die Orientierung aus der Folienmitte heraus und verschiebt sich mit zunehmendem Weg der Folie durch das Streckfeld (2) immer weiter nach außen bis in die Randzonen (5). Somit erfahren die Randzonen (5) der Folie (8) zeitlich gesehen die Streckung zu einem späteren Zeitpunkt (räumlich gesehen erst am Ende des Streckfeldes) als der Mittenbereich (6) der Folie (8). Auf Grund des üblichen Temperaturprofils im Streckfeld (2), d.h. abnehmende Temperatur in Laufrichtung der Folie (8), erfolgt nach dem Stand der Technik die Verstreckung der Randzonen (5) somit bei einer tieferen Temperatur (< $T_Q$) als die Verstreckung des Mittenbereiches (~ $T_Q$). Hinzu kommt, dass die Polymerketten der Bahnmitte nach der Verstreckung ein anderes Temperatur-Zeit-Erlebnis haben. Die Mitte (6) der Folie (8) durchläuft bereits verstreckt noch den gesamten Bereich des Streckfeldes (2), wohingegen die Randzonen (5) unmittelbar nach der Verstreckung bereits am Ende des Streckfeldes (2) angekommen sind und in das kühlere Fixierfeld (3) eintreten.

Das erfindungsgemäße Verfahren gleicht diese unterschiedlichen Temperatur-Zeit-Erlebnisse, die die verschiedenen Bereiche der Folie (8) nach dem Stand der Technik erfahren, einander an. Die Erwärmung oder Isolierung der Randzonen (5) in den Streckfeldern und/oder im Fixierfeld (3) trägt dazu bei, daß auch die spät verstreckten Randzonen (5) unmittelbar nach der Verstreckung noch eine gewisse Zeit einer höheren Temperatur ausgesetzt sind und damit ein ähnliches Temperatur-Zeit-Erlebnis erfahren, wie der Mittenbereich (6) der Folie (8).

In einer bevorzugten Ausführungsform des Verfahrens wird die Folie (8) in den Fixierfeldern (3), d.h. nach Verlassen des Streckfeldes (2), durch zusätzliche Heiz- oder Isolierelemente über den Randzonen (5) oder andere geeignete Maßnahmen so temperiert, dass die Folienbahn (8) während der Fixierung (3) in der Mitte (6) eine niedrigere Temperatur als im Bereich der Randzonen (5) aufweist, bzw. die Randzonen (5) eine erhöhte Temperatur aufweisen. Je nach Art des thermoplastischen Polymeren wird ein Temperaturprofil ausreichend sein, bei welchem die Temperaturen in den Randzonen (5) ca. 1 bis 20 Kelvin, vorzugsweise 3 bis 15 Kelvin, höher liegen als in der Bahnmitte (6).

Dieses Temperaturprofil kann durch verschiedene Mittel realisiert werden. Im Allgemeinen ist eine thermische Isolierung in den Randzonen (5) bevorzugt, damit die Folienbahn zu den Randzonen (5) hin eine höhere Temperatur als in der Bahnmitte (6) aufweist. Im einfachsten Fall können oberhalb und/oder unterhalb der Randzonen (5) thermisch isolierende Abdeckbleche (11) eingebaut werden. Diese werden so positioniert, dass der Luftstrom, welcher das Fixierfeld (3) durchströmt und die Folie (8) auf die gewünschten Temperatur abkühlt, über die Abdeckbleche (11) hinweg geführt wird, so dass eine Abkühlung der Folie (8) behindert wird. Alternativ oder zusätzlich sind auch Heizelemente möglich, welche Wärme abstrahlen und unter und/oder über den Randzonen (5) positioniert werden. Geeignete Heizelemente sind beispielsweise IR Strahler oder Gasheizer.

Der Fachmann wird sich im Einzelfall nach den baulichen Gegebenheiten des Fixierfeldes und der Anlage sowie nach dem herzustellenden Folientyp richten und entscheiden wie und wo genau zusätzliche Aufheizungen oder Isolierungen anzubringen sind. Die jeweilige Ausgestaltung kann unterschiedliche Formen annehmen. Das wesentliche Element ist jedoch allen Ausgestaltungen gemeinsam: In einem sich in Laufrichtung abkühlenden Rahmen müssen die Randzonen (5) im Fixierfeld (3) eine zusätzliche Aufheizung erfahren oder umgekehrt vor einer zu starken Abkühlung durch isolierende Maßnahmen geschützt werden. Dadurch werden die verstreckten Randzonen (5) bei erhöhter Temperatur (gegenüber der Mitte (6)) durch das Fixierfeld (3) geführt und alle verstreckten Bereiche sind unmittelbar nach der Verstreckung einer erhöhten Temperatur ausgesetzt, auch die Bereiche, die am Ende des Streckrahmens (2) unmittelbar nach der Verstreckung in das Fixierfeld (3) eintreten. Somit wird allen verstreckten Zone ein möglichst ähnliches Temperatur-Zeit-Erlebnis ermöglicht.

Überraschenderweise kann das unerwünschte ungleichmäßige Schrumpfprofil wesentlich verbessert werden, wenn die Randzonen (5) der Folie (8) in den Fixierfeldern (3) derartig erwärmt, bzw. weniger abgekühlt werden als der Mittenbereich (6).

Die konkreten Temperaturen, bzw. die Temperaturprofile in Längs- und Querrichtung richten sich nach dem Folientyp, der Foliendicke, sowie nach der Bauart der Folienherstellanlage und des Fixierfeldes.

Die übrigen Verfahrensbedingungen werden so gewählt, dass die Folie die gewünschten Schrumpfeigenschaften aufweist. Diese Zusammenhänge sind grundsätzlich bekannt. Nach dem erfindungsgemäßen Verfahren können somit Folien hergestellt werden, welche einen Querschrumpf von 1 bis 25%, vorzugsweise 3 bis 20% aufweisen, wobei diese Schrumpfwerte über die Breite der Folie nicht mehr als $\pm 5\%$, vorzugsweise $\pm$ 0,5 bis $\pm 3\%$, von dem Schrumpf im Mittenbereich (6) abweichen.

In weiterer Ausführungsform der Erfindung kann zur Vergleichmäßigung des Schrumpfprofils eine spezielle Temperaturführung in den Streckfeldern (2) erfolgen, welche gegebenenfalls mit den vorstehend beschriebenen Maßnahmen im Fixierfeld (3) ergänzt werden kann. Nach dieser Verfahrensvariante wird die Folie (8) im Streckfeld (2) durch zusätzliche Heiz- oder Isolierelemente (12) über den Randzonen (5) so temperiert, dass sich bereits im Streckfeld (2) über die Breite der Folienbahn ein Temperaturprofil einstellt, d.h. die Folienbahn weist beim Durchlaufen der Streckfelder (2) in der Mitte (6) eine niedrigere Temperatur auf als im Bereich der Randzonen (5). Auch hier richtet sich das genaue Temperaturprofil nach Art des thermoplastischen Polymeren, bevorzugt ist ein Temperaturgefälle von ca. 1 bis 20Kelvin, 3 -15 Kelvin, d.h. die Temperatur in den Randzonen (5) ist um diesen Betrag höher als in der Bahnmitte (6). Idealerweise sollte beim Einwirken der Streckkräfte in den Randzonen (5) in etwa die Temperatur vorliegen, die die Folie (8) auch beim Einlaufen in den Rahmen hat ($T_Q$). Überraschenderweise kann auch durch die Einstellung eines solchen Temperaturprofils im Streckfeld (2) ein sehr gleichmäßiger, d.h. konstanter Querschrumpf über die Breite der Folie (8) erzielt werden.

Es kann eine zusätzliche Erwärmung der Randzonen (5) erfolgen, beispielsweise durch zusätzliche Heizelemente, welche Wärme abstrahlen und über den zu erwärmenden Randzonen (5) positioniert werden. Geeignete Heizelemente sind beispielsweise IR Strahler oder Gasheizer. Bei einer Temperaturführung im Streckfeld (2) mit negativem Temperaturgradienten in Laufrichtung können über und/oder unter den Randzonen (5) thermisch isolierende Abdeckbleche eingebaut werden. Diese werden so positioniert, dass die Luft, welche das Streckfeld, bzw. die Folie temperieren, über die Abdeckbleche hinwegströmt, so dass eine Abkühlung der Randzonen durch den Luftaustausch behindert wird. Im Falle einer umgekehrten Temperaturführung im Streckfeld, d.h. bei einem positiven Temperaturgradienten, können Abdeckbleche (13) im Mittenbereich (6) der Folie (8) angebracht werden, wodurch im Ergebnis gleichfalls höhere Temperaturen in den Randzonen (5) erreicht werden.

Der Fachmann wird sich im Einzelfall nach den baulichen Gegebenheiten des Streckfeldes (2) und der Anlage sowie nach dem herzustellenden Folientyp richten und entscheiden wie und wo zusätzliche Aufheizungen oder Isolierungen anzubringen sind. Die jeweilige Ausgestaltung kann unterschiedliche Formen annehmen. Das wesentliche Element ist jedoch allen Ausgestaltungen gemeinsam: Die Randzonen (5) müssen durch zusätzliche Aufheizung oder Schutz vor Abkühlung eine höhere Temperatur als die Bahnmitte (6) aufweisen, so dass jeder Bereich über die gesamte Breite der Folie (8) die Verstreckung bei möglichst ähnlicher Folientemperatur erfährt und die später verstreckten Randzonen (5) auch noch nach der Verstreckung einer erhöhten Temperatur ausgesetzt sind, so dass alle Bereiche der Folie (8) (gesehen über die Folienbreite) ein möglichst ähnliches Streck- und Temperaturerlebnis erfahren.

Gegebenfalls kann die gleichmäßige Ausbildung des Schrumpfes noch weiter verbessert werden, in dem man beide Verfahrenvarianten kombiniert. Es werden dann bei negativem Temperaturgradienten im Streckfeld (2) durch die vorstehend beschriebenen Maßnahmen die Randzonen (5) sowohl im Bereich des Streckfeldes (2) als auch im Bereich der Fixierung (3), so erwärmt oder isoliert, daß sowohl im Streckfeld (2) als auch im Fixierfeld, die Randzonen (5) eine höhere Temperatur als die Mitte aufweisen.

Bei der Querstreckung einer Polypropylenfolie nach dem erfindungsgemäßen Verfahren erhält man ein hervorragendes Querschrumpfprofil. Das Verfahren ist somit zur Querstreckung von Polypropylenfolien besonders geeignet. Die nachstehende Tabelle fasst die Bedingungen bei der Verstreckung einer Folie die überwiegend aus isotaktischem Polypropylen aufgebaut ist beispielhaft zusammen:

| | Temperatur der Bahnmitte $T_B$ | Temperatur der Randzonen $T_R$ | | Breite der Randzonen (5) | Bahnbreite der gesäumten Endfolie |
|---|---|---|---|---|---|
| Streckfelder | 130 - 160°C | Von $T_B$+2K bis $T_B$+12K | Streckfaktor 5 -10 | 50 - 200 cm | 4 - 10 m |
| Fixierung | 30 - 140°C | Von $T_B$+2K bis $T_B$+30K | Konvergenz 1 - 20% | | |
| Streckfelder vorzugsweise | 135 - 155°C | Von $T_B$+3K bis $T_B$+8K | Streckfaktor 7,5-10 | 50 - 150 cm | 7 - 10 m |
| Fixierung vorzugsweise | 40 - 120°C | Von $T_B$+2K bis $T_B$+20K | 5 - 15% | | |

Zur Charakterisierung der Rohstoffe und der Folien wurden die folgenden Meßmethoden benutzt:

Schrumpf:

Die Längs- und Querschrumpfwerte beziehen sich auf die jeweilige Längenausdehnung der Folie (längs $L_0$ und quer $Q_0$) vor dem Schrumpfprozeß. Die Längsrichtung ist die Maschinenrichtung, als Querrichtung wird entsprechend die Richtung quer zum Maschinenlauf definiert. Das Folienmuster von 10cm*10cm wird im Umluftofen bei 130°C über eine Dauer von 5 min geschrumpft. Anschließend werden die verbliebenen Längenausdehnungen des Musters längs und quer erneut bestimmt ($L_1$ und $Q_1$). Als Schrumpf in % wird dann die Differenz der ermittelten Längen im Verhältnis zur ursprünglichen Länge $L_0$ und $Q_0$ mal 100 angegeben.

$$Längsschrumpf\ L_s[\%]\ =\ \frac{L_0 - L_1}{L_0} * 100[\%]$$

$$Querschrumpf\ Q_s[\%]\ =\ \frac{Q_0 - Q_1}{Q_0} * 100[\%]$$

Diese Bestimmungsmethode für den Längs- und Querschrumpf entspricht DIN 40634.

Die Erfindung wird nun an Hand der nachstehenden Ausführungsbeispiele erläutert:

**Beispiel 1**

Es wurde durch Coextrusion und anschließende stufenweise Orientierung in Längs- und Querrichtung eine transparente dreischichtige Folie mit symmetrischem Aufbau mit einer Gesamtdicke von 20 $\mu$m hergestellt. Die Deckschichten hatten eine Dicke von jeweils 0,8 $\mu$m.

A-Basisschicht:

| | |
|---|---|
| 89,85 Gew.-% | hochisotaktisches Propylenhomopolymer mit einem Schmelzpunkt von 166 °C und einem Schmelzflußindex von 3,4 g/10min , wobei der n-heptanunlösliche Anteil einen Kettenisotaxie-Index von 98 % hatte. |
| 10,0 Gew.-% | Kohlenwasserstoffharz Erweichungspunkt 120 °C mit einem mittleren Molekulargewicht Mw von 1000. |
| 0,15 Gew.-% | N,N-bis-ethoxyalkylamin (Antistatikum) |

B-Deckschichten:

| | |
|---|---|
| ca. 75 Gew.-% | statistisches Ethylen-Propylen-Copolymeres mit einem $C_2$-Gehalt von 4,5 Gew.-% |
| ca. 25 Gew.-% | statistische Ethylen-Propylen-Butylen-Terpolymer mit einem Ethylengehalt von 3 Gew.-% und einem Butylengehalt von 7 Gew.-% (Rest Propylen) |
| 0,33 Gew.-% | $SiO_2$ als Antiblockmittel mit einer mittleren Teilchengröße von 2 $\mu$m |
| 0,90 Gew.-% | Polydimethylsiloxan mit einer Viskosität von 30 000 mm$^2$/s |

Die Herstellungsbedingungen in den einzelnen Verfahrensschritten waren:

| | | | |
|---|---|---|---|
| Extrusion: | Temperaturen | Basisschicht: | 260 °C |
| | | Deckschichten: | 240 °C |
| | Temperatur der Abzugswalze: | | 30 °C |
| Längsstreckung: | Temperatur: | | 110 °C |
| | Längsstreckverhältnis: | | 5,5 |
| Querstreckung: | Temperatur: (negativer Gradient) | | 150 - 140°C |

(fortgesetzt)

| | Querstreckverhältnis: | 9 |
|---|---|---|
| Fixierung: | Temperatur: | 60 - 120°C |
| | Konvergenz: | 8% |

Bei dem Querstreckverhältnis 9 handelt es sich um einen Effektivwert. Dieser Effektivwert berechnet sich aus der Endfolienbreite B, reduziert um die zweifache Säumstreifenbreite b (Ränder 4), dividiert durch die Breite der längsgestreckten Folie , ebenfalls um die zweifache Säumstreifenbreite b (Ränder 4) reduziert.

Erfindungsgemäß wurden im Bereich der Fixierung die Randzonen mit Abdeckblechen vor dem kühlenden Luftstrom geschützt, so dass die Temperatur dort um ca. 25°C höher lag als die Temperatur in der Bahnmitte. Die Breite der Abdeckbleche betrug ca. 1 m. Die gesäumte Endfolie hatte eine Breite von 700 cm. Der Querschrumpf der Folie wurde im Mittenbereich und in den Randzonen gemessen. In der Mitte betrug der Querschrumpf im Mittel $13\pm0,5\%$ und in den beiden Randzonen im Mittel $15,5\pm0,9\%$ $\Delta 1,5$ %).

Beispiel 2

Es wurde eine Folie der gleichen Zusammensetzung wie in Beispiel 1 beschrieben hergestellt. Die Verfahrensbedingungen entsprachen gleichfalls denen des Beispiels 1. Im Unterschied zu Beispiel 1 wurden jetzt in den Streckfeldern IR-Strahler im Bereich der Randzonen angebracht, so dass bei der Verstreckung der Folie die Randzonen eine gegenüber der Folienmitte erhöhte Temperatur aufwiesen. Die Temperatur lag um ca. 6°C höher. Der Querschrumpf der Folie wurde ebenfalls im Mittenbereich und in den Randzonen gemessen. In der Mitte betrug der Querschrumpf im Mittel $13\pm0,5\%$ und in den beiden Randzonen im Mittel $13,5\pm0,5\%$ ($\Delta$ 0,5 %).

Vergleichsbeispiel:

Es wurde eine Folie der gleichen Zusammensetzung und wie in Beispiel 1 beschrieben hergestellt. Die Verfahrensbedingungen wurden nicht geändert. Im Unterschied zu Beispiel 1 wurden keine besonderen Maßnahmen zur Einstellung eines Temperaturprofils über die Breite der Folie unternommen. Weder im Bereich der Streckfelder noch im Fixierfeld wurden Abdeckbleche oder IR-Strahler eingebaut. Der Querschrumpf der Folie wurde im Mittenbereich und in den Randzonen gemessen. In der Mitte betrug der Querschrumpf im Mittel $13\pm0,5\%$ und in den beiden Randzonen im Mittel $18+1,5\%$ ($\Delta$ 5 %).

## Patentansprüche

1. Verfahren zum Querstrecken einer unorientierten oder einer in Längsrichtung orientierten Folienbahn aus thermoplastischem Kunststoff, bei welchem eine unverstreckte oder eine längsgestreckte Folie (6) einem Querstreckrahmen zugeführt wird, wobei der Querstreckrahmen Aufheizfelder (1), Streckfelder (2) und Fixierfelder (3) umfasst, und die Folie (8) am Beginn des ersten Aufheizfeldes an beiden Rändern (4) von den Kluppen (7) einer Kluppenkette erfasst wird und in den Aufheizfeldern (1) auf eine Querstrecktemperatur $T_Q$ aufgeheizt wird und die Folie (8) in den anschließenden Streckfeldern (2) durch divergierende, V-förmige Führung der Kluppenkette in Querrichtung verstreckt wird und in den Fixierfeldern (3) einer Temperatur $T_F$ ausgesetzt wird, wobei $T_Q > T_F$ ist, wobei die Randzonen (5) der Folie (8) in den Streckfeldern (2) und/oder in den Fixierfeldern (3) derart aufgeheizt oder thermisch isoliert werden, dass die Randzonen (5) der Folie (8) beim Querstrecken und/oder beim Fixieren eine höhere Temperatur als die Mitte der Folienbahn (6) aufweisen und wobei die Randzonen (5) unmittelbar an die Ränder (4), die von den Kluppen (7) erfaßt werden, angrenzen.

2. Verfahren nach Anspruch 1 **dadurch gekennzeichnet, dass** der thermoplastische Kunststoff ein Polyester, Polyethylen, Polycarbonat, Polypropylen, Polyamid oder ein Cycloolefinpolymer ist.

3. Verfahren nach Anspruch 1 oder 2, **dadurch gekennzeichnet, dass** die Randzonen (5) in den Streckfeldern (2) eine höhere Temperatur als die Mitte der Folienbahn aufweisen.

4. Verfahren nach einem der Ansprüche 1 oder 2, **dadurch gekennzeichnet, dass** die Randzonen (5) in den Fixierfeldern (3) eine höhere Temperatur als die Mitte der Folienbahn (6) aufweisen.

5. Verfahren nach einem der Ansprüche 1 oder 2, **dadurch gekennzeichnet, dass** die Randzonen (5) in den Streckfeldern (2) und in den Fixierfeldern (3) eine höhere Temperatur als die Mitte der Folienbahn (6) aufweisen.

6. Verfahren nach einem der Ansprüche 1 bis 3 oder 5, **dadurch gekennzeichnet, dass** im Bereich der Streckfelder (2) die Temperatur der Randzonen (5) 1 bis 20 Kelvin über der Temperatur des Mittenbereiches der Folienbahn (6) liegt.

7. Verfahren nach einem der Ansprüche 1, 2, 4 oder 5, **dadurch gekennzeichnet, dass** im Bereich der Fixierfelder (3) die Temperatur der Randzonen (5) 1 bis 20 Kelvin über der Temperatur des Mittenbereiches der Folienbahn (6) liegt.

8. Verfahren nach einem der Ansprüche 1 bis 7, **dadurch gekennzeichnet, dass** die unverstreckte oder die längsverstreckte Folienbahn (8) eine Dicke von 2 bis 2000 $\mu$m hat.

9. Verfahren nach einem der Ansprüche 1 bis 8, **dadurch gekennzeichnet, dass** jede Randzone (5) 5 bis 25% der Bahnbreite der biaxial verstreckten gesäumten der Folienbahn (8) ausmacht.

10. Verfahren nach einem der Ansprüche 1 bis 9, **dadurch gekennzeichnet, dass** die Folienbahn (8) eine längsverstreckte Polypropylenfolie ist.

11. Verfahren nach Anspruch 10, **dadurch gekennzeichnet, dass** die Polypropylenfolie nach der Querstreckung und nach Säumung der unverstreckten Ränder eine Bahnbreite von 5 bis 10m aufweist und jede Randzone (5) 50 bis 200cm breit ist.

12. Verfahren nach einem der Ansprüche 1 bis 11, **dadurch gekennzeichnet, dass** über den beiden Randzonen (5) in den Streckfeldern (2) und/oder Fixierfeldern (3) zusätzliche Heizelemente angebracht sind.

13. Verfahren nach einem der Ansprüche 1 bis 11, **dadurch gekennzeichnet, dass** im Bereich der Fixierfelder (3) über den beiden Randzonen (5) thermisch isolierende Abdeckbleche (11) angebracht sind.

14. Verfahren nach einem oder mehreren der Ansprüche 1 bis 11, **dadurch gekennzeichnet, dass** im Bereich der Streckfelder (2) die Temperatur in Laufrichtung der Folie (8) abnimmt und über den beiden Randzonen (5) thermisch isolierende Abdeckbleche (12) angebracht sind.

15. Verfahren nach einem oder mehreren der Ansprüche 1 bis 11, **dadurch gekennzeichnet, dass** im Bereich der Streckfelder (2) die Temperatur in Laufrichtung der Folie (8) zunimmt und über dem Mittenbereich der Folienbahn (6) thermisch isolierende Abdeckbleche angebracht sind.

16. Verfahren nach einem oder mehreren der Ansprüche 1 bis 15, **dadurch gekennzeichnet, dass** die Folie (8) um den Faktor 2 bis 12 querverstreckt wird.

17. Verfahren nach einem oder mehreren der Ansprüche 1 bis 15, **dadurch gekennzeichnet, dass** die Folie (8) eine Polypropylenfolie ist und um den Faktor 5 bis 12 querverstreckt wird.

18. Verfahren nach einem der Ansprüche 1 bis 17, **dadurch gekennzeichnet, daß** die Folie einen Querschrumpf von 3 - 25% aufweist.

19. Verfahren nach einem der Ansprüche 1 bis 17, **dadurch gekennzeichnet, daß** die Folie einen Querschrumpf von 3 - 25% aufweist und die Schrumpfwerte über die Breite der Folienbahn nicht mehr als $\pm$5% vom Schrumpfwert im Mittenbereich der Folie abweichen.

20. Verfahren zur Herstellung einer Folie mit einem Querschrumpf von 3 bis 25%, **dadurch gekennzeichnet, daß** die Folie nach einem Verfahren gemäß einem der Ansprüche 1 bis 7 in Querrichtung gestreckt wurde.

**Claims**

1. Method for lateral stretching of a film strip which is unoriented or oriented in the longitudinal direction, made of synthetic thermoplastic, in which an unstretched or longitudinally-stretched film is fed onto a lateral stretching frame, wherein the lateral stretching frame comprises heating fields, stretching fields, and fixing fields, and the film is held in place at the beginning of the first heating field on both edges by the grippers of a gripper chain, and is heated in the heating fields to a lateral stretching temperature $T_Q$, and the film is stretched in the subsequent stretching fields by diverging, V-shaped conveyance of the gripper chain in the lateral direction and in the fixing fields is exposed to a temperature $T_F$, wherein $T_Q > T_F$, wherein the edge zones of the film are heated or thermally isolated in the stretching fields and/or the fixing fields in such a way that the edge zones of the film have a higher temperature than the middle of the film strip during lateral stretching and/or fixing, and wherein the edge zones directly adjoin the edges which are held in place by the grippers.

2. Method according to claim 1, **characterised in that** the synthetic thermoplastic is a polyester, polyethylene, polycarbonate, polypropylene, polyamide or a cycloolefin polymer.

3. Method according to claim 1 or 2, **characterised in that** the edge zones (5) in the stretching fields (2) have a higher temperature than the middle of the film strip.

4. Method according to one of the claim 1 or 2, **characterised in that** the edge zones (5) in the fixing fields (3) have a higher temperature than the middle of the film strip (6).

5. Method according to one of the claims 1 or 2, **characterised in that** the edge zones (5) in the stretching fields (2) and in the fixing fields (3) have a higher temperature than the middie of the film strip (6).

6. Method according to one of the claims 1 to 3 or 5, **characterised in that** in the area of the stretching field (2) the temperature of the edge zones (5) lies 1 to 20 Kelvin above the temperature of the middle area of the film strip (6).

7. Method according to one of the claims 1, 2, 4 or 5, **characterised in that** in the area of the fixing fields (3) the temperature of the edge zones (5) lies 1 to 20 Kelvin above the temperature of the middle area of the film strip (6).

8. Method according to one of the claims 1 to 7, **characterised in that** the unstretched or the longitudinally-stretched film strip (8) has a thickness of 2 to 2000 $\mu$m.

9. Method according to one of the claims 1 to 8, **characterised in that** every edge zone (5) makes up 5 to 25% of the strip width of the biaxially-stretched bordered film strip (8).

10. Method according to one of the claims 1 to 9, **characterised in that** the film strip (8) is a longitudinally-stretched polypropylene film.

11. Method according to claim 10, **characterised in that** the polypropylene film after lateral stretching and after bordering of the unstretched edges has a strip width of 5 to 10m and every edge zone (5) is 50 to 200cm wide.

12. Method according to one of the claims 1 to 11, **characterised in that** additional heating elements are attached in the stretching fields (2) and/or fixing fields (3) over both edge zones (5).

13. Method according to one of the claims 1 to 11, **characterised in that** in the area of the fixing fields (3) thermally isolating covering plates (11) are attached over both edge zones (5).

14. Method according to one or several of the claims 1 to 11, **characterised in that** in the area of the stretch fields (2) the temperature in the running direction of the film (8) decreases and thermally isolating covering plates (12) are attached over both edge zones (5).

15. Method according to one or several of the claims 1 to 11, **characterised in that** in the area of the stretching fields (2) the temperature in the running direction of the film (8) increases and thermally isolating covering plates are attached over the middle area of the film strip (6).

16. Method according to one or several of the claims 1 to 15, **characterised in that** the film (8) is laterally stretched by a factor or 2 to 12.

17. Method according to one or several of the claims 1 to 15, **characterised in that** the film (8) is a polypropylene film and is laterally stretched by a factor of 5 to 12.

18. Method according to one of the claims 1 to 17, **characterised in that** the film has a lateral shrinkage of 3-25%.

19. Method according got one of the claims 1 to 17, **characterised in that** the film has a lateral shrinkage of 3-25% and the shrinkage values over the width of the film strip do not deviate by more than $\pm 5\%$ from the shrinkage value in the middle area of the film.

20. Method for the manufacture of a film with a lateral shrinkage of 3 to 25%, **characterised in that** the film is stretched according to a method as per one of the claims 1 to 7 in the lateral direction.

**Revendications**

1. Procédé d'étirage transversal d'une bande de film non orientée ou orientée dans le sens de la longueur et constituée d'un matériau thermoplastique, dans lequel un film non étiré ou étiré dans la longueur vient habiller un cadre d'étirage transversal, le cadre d'étirage transversal comprenant des zones de chauffe, des zones d'étirage et des zones de fixation, le film étant saisi au début de la première zone de chauffe au niveau de ses deux bords par les pinces d'une chaîne à pinces et chauffé au niveau des zones de chauffe à une température d'étirage transversal Tq, puis étiré dans le sens transversal au niveau des zones d'étirage sous l'effet écarteur en forme de V de la chaîne à pinces, et exposé à une température $T_f$ au niveau des zones de fixation, dans lequel Tq $>T_f$, les zones de bordure du film étant ainsi chauffées ou isolées thermiquement au niveau des zones d'étirage et/ou des zones de fixation, que les zones de bordure du film présentent lors de l'étirage transversal et/ou de la fixation une température supérieure à la partie centrale de la bande de film, et les zones de bordure avoisinant directement les bordures saisies par les pinces.

2. Procédé selon la revendication 1, **caractérisé en ce que** le matériau thermoplastique est un polyester, polyéthylène, polycarbonate, polypropylène, polyamide ou un polymère cyclooléfinique.

3. Procédé selon la revendication 1 ou 2, **caractérisé en ce que** les zones de bordure (5), lorsqu'elles franchissent les zones d'étirage (2), présentent une température plus élevée qu'au centre de la bande de film.

4. Procédé selon l'une des revendications 1 ou 2, **caractérisé en ce que** les zones de bordure (5), lorsqu'elles franchissent les zones de fixation (3), présentent une température plus élevée qu'au centre de la bande de film (6).

5. Procédé selon l'une des revendications 1 ou 2, **caractérisé en ce que** les zones de bordure (5), lorsqu'elles franchissent les zones d'étirage (2) et les zones de fixation (3), présentent une température plus élevée qu'au centre de la bande de film (6).

6. Procédé selon l'une des revendications 1 à 3 ou 5, **caractérisé en ce que**, au niveau des zones d'étirage (2), la température des zones de bordure (5) est de 1 à 20 degré(s) Kelvin supérieure à la température au centre de la bande de film (6).

7. Procédé selon l'une des revendications 1, 2, 4 ou 5, **caractérisé en ce que**, au niveau des zones de fixation (3), la température des zones de bordure (5) est de 1 à 20 degré(s) Kelvin supérieure à la température au centre de la bande de film (6).

8. Procédé selon l'une des revendications 1 à 7, **caractérisé en ce que** la bande de film (8) non étirée ou étirée dans la longueur présente une épaisseur comprise entre 2 et 2000 $\mu$m.

9. Procédé selon l'une des revendications 1 à 8, **caractérisé en ce que** chacune des zones de bordure (5) représente entre 5 et 25 % de la largeur de la bande de film (8) étirée biaxialement.

10. Procédé selon l'une des revendications 1 à 9, **caractérisé en ce que** la bande de film (8) est un film de polypropylène étiré dans la longueur.

11. Procédé selon la revendication 10, **caractérisé en ce que** le film de polypropylène présente, à l'issue de l'étirage transversal et de l'ourlage des bords non étirés, une largeur comprise entre 5 et 10 m et chacune des zones de bordure (5) une largeur comprise entre 50 et 200 cm.

12. Procédé selon l'une des revendications 1 à 11, **caractérisé en ce que** des éléments de chauffe additionnels sont ajoutés au-dessus des deux zones de bordure (5) au niveau des zones d'étirage (2) et/ou des zones de fixation (3).

13. Procédé selon l'une des revendications 1 à 11, **caractérisé en ce que** des tôles de protection thermo-isolantes (11) sont ajoutées au-dessus des deux zones de bordure (5) au niveau des zones de fixation (3).

14. Procédé selon une ou plusieurs des revendications 1 à 11, **caractérisé en ce que**, au niveau des zones d'étirage (2), la température diminue dans le sens de passage du film (8) et des tôles de protection thermo-isolantes (12) sont ajoutées au-dessus des deux zones de bordure (5).

15. Procédé selon une ou plusieurs des revendications 1 à 11, **caractérisé en ce que**, au niveau des zones d'étirage (2), la température augmente dans le sens de passage du film (8) et des tôles de protection thermo-isolantes sont ajoutées au-dessus de la zone centrale de la bande de film (6).

16. Procédé selon une ou plusieurs des revendications 1 à 15, **caractérisé en ce que** le film (8) est étiré transversalement d'un facteur compris entre 2 et 12.

17. Procédé selon une ou plusieurs des revendications 1 à 15, **caractérisé en ce que** le film (8) est un film de polypropylène étiré transversalement d'un facteur compris entre 5 et 12.

18. Procédé selon l'une des revendications 1 à 17, **caractérisé en ce que** le film présente un retrait transversal compris entre 3 et 25 %.

19. Procédé selon l'une des revendications 1 à 17, **caractérisé en ce que** le film présente un retrait transversal compris entre 3 et 25 % et les valeurs de retrait au-dessus de la largeur de la bande de film ne diffèrent pas de plus de 5 % environ de la valeur de retrait au niveau de la zone centrale du film.

20. Procédé de fabrication d'un film présentant un retrait transversal compris entre 3 et 25 %, **caractérisé en ce que** le film est étiré dans le sens transversal conformément à un procédé conforme à l'une des revendications 1 à 7.

Fig. 1

Fig. 2

Fig. 3

Fig. 4

Fig. 5

Fig. 5a

EP 1 883 525 B2

Fig. 6

EP 1 883 525 B2

Fig. 6a

EP 1 883 525 B2

**Fig. 7**

Fig. 7a

Fig. 8

EP 1 883 525 B2

Fig. 8a

**IN DER BESCHREIBUNG AUFGEFÜHRTE DOKUMENTE**

**In der Beschreibung aufgeführte Patentdokumente**

- DE 2356743 A
- JP 2002361733 A
- WO 9825754 A
- WO 9825753 A